## Europäisches Patentamt
## European Patent Office
## Office européen des brevets

(11) Numéro de publication: **0 222 653**
**B1**

(12) **FASCICULE DE BREVET EUROPEEN**

(45) Date de publication du fascicule du brevet:
**19.12.90**

(21) Numéro de dépôt: **86402347.8**

(22) Date de dépôt: **20.10.86**

(51) Int. Cl.⁵: **H04N 11/18**

(54) Démodulateur de chrominance SECAM.

(30) Priorité: **25.10.85 FR 8515879**

(43) Date de publication de la demande:
**20.05.87 Bulletin 87/21**

(45) Mention de la délivrance du brevet:
**19.12.90 Bulletin 90/51**

(84) Etats contractants désignés:
**DE FR IT NL**

(56) Documents cités:
**DE-A- 3 243 014**

**1985 IEEE INTERNATIONAL CONFERENCE ON
CONSUMER ELECTRONICS, DIGEST OF TECHNICAL
PAPERS, ICCE, 5-7 juin 1985, pages 122-123, IEEE, New
York, US; R.A. BLAUSCHILD et al.: "A low
power, 5V, 150MHZ PLL with improved linearity"**

(73) Titulaire: **THOMSON-CSF, 51, Esplanade du Général de
Gaulle, F-92800 Puteaux(FR)**

(72) Inventeur: **Berger, Philippe, THOMSON-CSF
SCPI 19, avenue de Messine, F-75008 Paris(FR)**
Inventeur: **Douziech, Patrick, THOMSON-CSF
SCPI 19, avenue de Messine, F-75008 Paris(FR)**

(74) Mandataire: **de Beaumont, Michel et al, 1bis, rue
Champollion, F-38000 Grenoble(FR)**

ACTORUM AG

**Description**

La présente invention concerne les circuits de télévision en couleurs et plus précisément un circuit de démodulation de chrominance pour récepteur de télévision en couleurs tel que décrit dans le document DE-A-3 243 014.

Dans le système SECAM, deux signaux de chrominance R-Y et B-Y qui modulent en fréquence deux sous-porteuses, sont ajoutés au signal de luminance Y qui est une somme pondérée des signaux primaires R, V, B (rouge, vert, bleu) représentant les informations de couleurs des images à transmettre. Les signaux R-Y et B-Y sont transmis alternativement à chaque ligne de balayage : une ligne transporte l'information "rouge" R-Y tandis que la suivante transporte l'information "bleue" B-Y.

Le signal vidéo reçu par un récepteur de télévision passe dans un filtre de séparation qui possède une sortie pour un signal de luminance (débarassé des informations de chrominance) et une sortie pour un signal de chrominance (débarassé des informations de luminance).

On s'intéresse ici au signal de chrominance et on ne parlera donc pas du signal de luminance.

Le signal vidéo qui est transmis ligne par ligne comporte alternativement un signal de chrominance rouge R-Y et un signal de chrominance bleue B-Y. Une ligne à retard et un commutateur permettent de disposer simultanément des deux signaux R-Y et B-Y bien qu'ils soient reçus séparément.

Deux voies de démodulation distinctes sont prévues, accordées chacune sur la fréquence sous-porteuse correspondant à l'information de chrominance considérée. Les deux voies sont identiques et on ne décrira donc que l'une d'elles.

Dans le signal vidéo qui est transmis ligne par ligne, chaque ligne comporte une partie de transmission de signal utile précédée par une partie de synchronisation correspondant au moment du retour de balayage ligne.

Pour le signal de chrominance, le moment du retour de balayage ligne est utilisé pour transmettre une salve à la fréquence de sous-porteuse du signal de chrominance de la ligne qui suit : salve à la fréquence "rouge" pour une ligne transportant l'information R-Y, salve à la fréquence "bleue" pour une ligne B-Y.

Dans le récepteur, on se sert de cette salve pour déterminer si la ligne qui vient est une ligne R-Y ou une ligne B-Y.

Il est absolument nécessaire que la démodulation de l'information de chrominance modulée en fréquence fournisse un signal de chrominance parfaitement calé par rapport à une tension de référence qui représente par exemple l'égalité R-Y=0 (pour la voie rouge) ou B-Y=0 (pour la voie bleue).

Autrement dit, lorsque le signal de chrominance R-Y est nul, c'est-à-dire lorsque la fréquence émise est exactement la fréquence de repos, le démodulateur doit fournir exactement une valeur de tension de référence bien connue et stable. Si elle n'est pas stable, les couleurs de l'image varieront ; si elle est stable mais mal définie, les couleurs seront incorrectes.

En pratique, pendant le retour de ligne, on remplace le signal démodulé par une tension de référence stable sur laquelle on calera l'ensemble du signal démodulé.

Mais pour cela il faut que le démodulateur soit réglé (ou se règle automatiquement) d'une manière telle que lorsqu'il reçoit la fréquence de repos il fournisse exactement une tension égale à cette tension de référence.

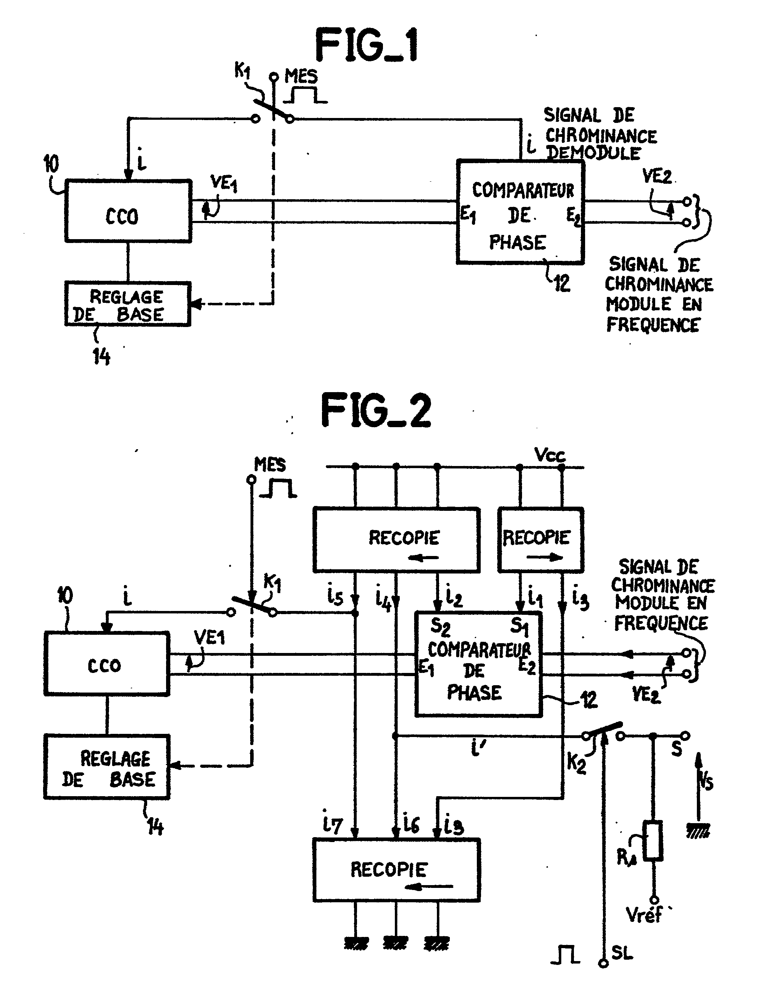

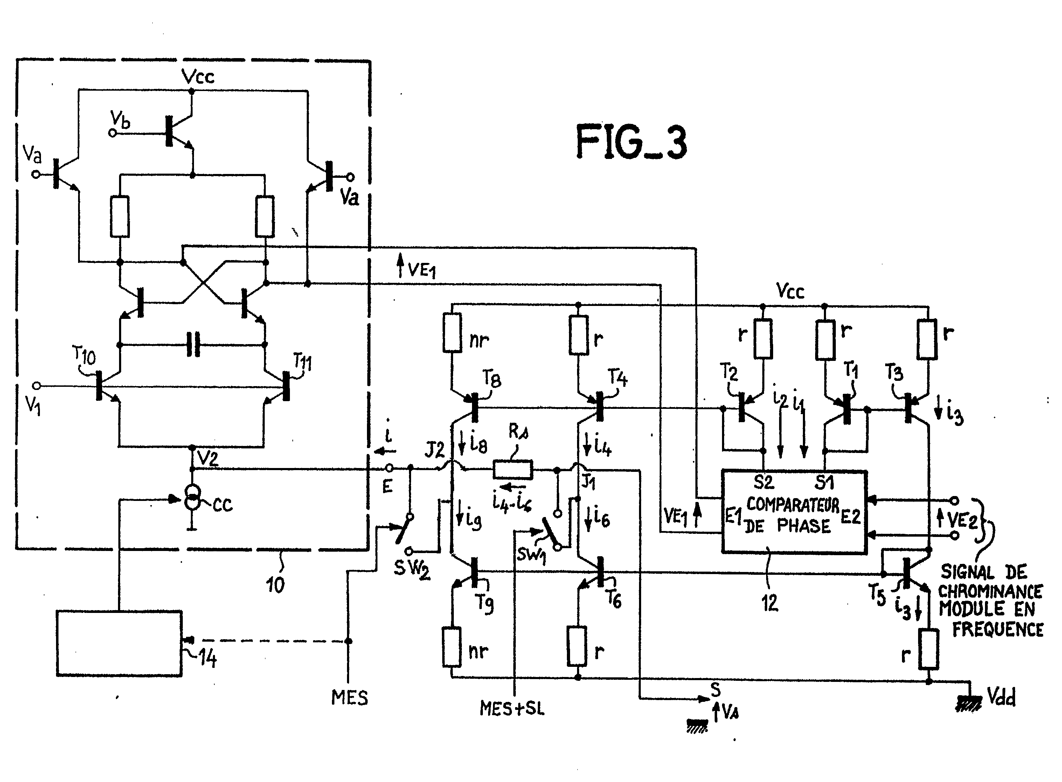

Pour mieux expliquer les problèmes concrets qui se posent, on va décrire précisément le fonctionnement d'un démodulateur de chrominance à boucle asservie en phase. Le schéma de principe correspondant est donné à la figure 1 et un schéma plus détaillé à la figure 2.

Le démodulateur est composé à la base d'un oscillateur 10 à fréquence commandée par un courant et d'un comparateur de phase 12.

L'oscillateur fournit un signal de fréquence variable autour d'une valeur qui est en principe la fréquence de repos $F_0$ du signal de chrominance. Le signal de sortie de l'oscillateur sort sous forme d'une tension différentielle VE1 qui est appliquée à un premier couple d'entrées différentielles E1 du comparateur de phase 12.

Le signal de chrominance modulé en fréquence est appliqué sous forme d'une tension différentielle VE2 sur un autre couple d'entrées différentielles E2 du comparateur de phase.

Le principe général de fonctionnement est le suivant : le comparateur de phase fournit un courant de sortie i qui est appliqué comme signal de commande à l'oscillateur 10. La fréquence de l'oscillateur varie en fonction de ce courant qui, lui-même, varie en fonction de l'écart de phase entre les signaux qu'il reçoit sur ses deux couples d'entrées.

Il en résulte que la fréquence de l'oscillateur s'ajuste exactement à la valeur de la fréquence du signal de chrominance. Si la fréquence du signal de chrominance varie, le courant de sortie i variera proportionnellement pour que la fréquence de l'oscillateur suive. Les variations d'amplitude de ce courant i représentent donc les variations d'amplitude du signal de chrominance démodulé.

La boucle d'asservissement de phase ainsi constituée réalise donc bien une démodulation de fréquence. Pour que le démodulateur reste calé sur la fréquence de repos $F_0$, on effectue périodiquement (par exemple pendant les retours de trame du balayage d'image) un réglage de base de la fréquence d'oscillation de l'oscillateur 10. Pour cela, un circuit de réglage de base 14, actionné périodiquement sous le contrôle d'un signal MES, établit (et garde en mémoire entre deux mesures périodiques) un courant de réglage de base qui est appliqué à l'oscillateur. Ce courant de réglage de base est tel que lorsqu'il est appliqué à l'oscillateur en l'absence de courant d'asservissement i (ce dernier étant interrompu par un interrupteur K1 au moment de ce réglage), l'oscillateur délivre exactement la fréquence $F_0$. Un tel réglage de base est classique ; on l'effectue par exemple à chaque balayage de trame, pendant le retour de trame. Un quartz à la fréquence $F_0$ ou un synthétiseur de fréquence permet le contrôle et l'obtention de la fréquence $F_o$ en sortie de l'oscillateur.

La difficulté de réalisation est la suivante : pour des raisons tenant à la technologie de fabrication des circuits intégrés, on est conduit à réaliser un oscillateur commandé en courant et non pas en tension ; et de plus, pour les mêmes raisons, le courant i de commande ne pourra pratiquement être engendré par le comparateur de phase que sous forme d'une différence de deux autres courants.

Au contraire, on souhaite recueillir le signal de chrominance démodulé sous forme d'une tension variant par rapport à un potentiel de référence bien déterminé, car c'est la seule manière commode pour l'utiliser ensuite pour établir les signaux de chrominance R, B, V et les amplifier pour les appliquer au tube cathodique.

Pour convertir le courant d'asservissement i (qui représente le signal de chrominance démodulé) en une tension calée par rapport à un potentiel de référence il faudrait le faire passer dans une résistance reliée à ce potentiel de référence. Mais alors on ne peut pratiquement plus utiliser ce même courant pour faire l'asservissement. En d'autres mots, il est a priori difficile d'utiliser le courant d'asservissement à la fois pour faire un asservissement et pour le convertir en une tension qui constituera le signal de sortie calé par rapport à un potentiel de référence.

C'est pourquoi, dans un schéma pratique de mise en oeuvre du principe de la figure 1, on effectue une recopie du courant d'asservissement i pour produire un courant i' ; le courant i sert à l'asservissement tandis que le courant i' est appliqué dans une résistance Rs reliée à un potentiel de référence Vréf pour produire une tension de sortie Vs représentant le signal de chrominance démodulé. On sépare ainsi la fonction "asservissement" et la fonction "conversion en tension".

Le schéma de la figure 2 représente une possibilité de réalisation correspondant à cette idée. Les recopies de courant sont faciles à faire dans les circuits intégrés mais on verra ci-dessous leurs limites.

Le schéma de base est le même que celui de la figure 1, avec cette différence que le comparateur de phase ne produit pas un courant i mais produit sur deux sorties différentielles S1, S2 deux courants $i_1$ et $i_2$ dont la différence $i_1 - i_2$ doit constituer le courant d'asservissement i.

En pratique, pour faire la différence $i_1 - i_2$, on recopie le courant $i_1$ pour produire un courant $i_3 = i_1$ ; par ailleurs on recopie deux fois le courant $i_2$ pour produire un courant $i_4 = i_2$ d'une part et un courant $i_5 = i_2$ d'autre part. Enfin on recopie deux fois le courant $i_3$ pour produire un courant $i_6 = i_3$ d'une part et un courant $i_7 = i_3$ d'autre part.

La différence des courants $i_5$ et $i_7$ sert à établir le courant d'asservissement $i = i_5 - i_7 = i_2 - i_1$ ; la différence des courants $i_4$ et $i_6$ sert à établir le courant de démodulation i' à convertir dans une résistance Rs en une tension Vs représentant le signal de chrominance démodulé ; $i' = i_4 - i_6 = i_2 - i_3 = i_2 - i_1 = i$. On notera qu'un interrupteur K2, ouvert sous la commande d'un signal SL pendant toute la durée du retour de ligne, permet d'annuler le courant i' pendant cette durée, et donc d'appliquer alors le potentiel Vréf à la sortie S.

En théorie i' = i, mais en pratique la recopie n'est pas absolument parfaite. On voudrait que lorsque la fréquence reçue par l'entrée E2 est la fréquence $F_o$ la tension de sortie Vs soit exactement Vréf. Cela suppose que i' soit alors rigoureusement nul. Mais l'oscillateur est réglé, pendant les retours de trames, pour émettre une fréquence $F_o$ lorsque i = 0 et non lorsque i' = 0. Si les recopies de courant introduisent une erreur sur l'égalité de i et i', cette erreur se reproduit dans le signal démodulé.

La précision demandée est de 0,35 %, c'est-à-dire que le démodulateur doit fournir une tension Vréf (i' = 0) pour une fréquence d'entrée qui ne s'écarte pas de plus de 3 kHz de la fréquence centrale $F_o$ sur une plage totale de modulation qui est de 850 kHz.

Cette précision est impossible à atteindre lorsqu'il y a des recopies de courant telles que celles de la figure 2 : la précision que l'on peut espérer lors d'une recopie de courant est de 1 % environ et ici il y a au moins deux recopies qui interviennent sur l'égalité de i et i'.

Pour éliminer cet inconvénient, la présente invention propose d'apporter au schéma de la figure 2 les modifications suivantes :

1) l'oscillateur commandé en courant est choisi d'un type tel que son entrée de commande en courant soit à un potentiel fixe pouvant servir de potentiel de référence ; en particulier on pourra choisir un oscillateur dont la commande en courant s'effectue par injection d'un courant à un noeud de circuit qui relie une source de courant aux émetteurs de deux transistors ayant leurs bases à un potentiel constant ;

2) le comparateur de phase possède deux sorties de courant différentielles ; chacune d'elles est recopiée et la différence des courants recopiés est appliquée à une résistance reliée par ailleurs à l'entrée de commande en courant de l'oscillateur ;

3) les sorties de courant différentielles subissent par ailleurs chacune une autre recopie avec un rapport de recopie plusieurs fois inférieur au rapport de recopie de la première recopie, et la différence des courants recopiés de cette autre recopie est appliquée à l'entrée de commande en courant de l'oscillateur.

D'autres caractéristiques et avantages de l'invention apparaîtront à la lecture de la description détaillée qui suit et qui est faite en référence aux dessins annexés dans lesquels :
- les figures 1 et 2 déjà décrites représentent un type de démodulateur de chrominance que la présente invention cherche à améliorer,
- la figure 3 représente un démodulateur de chrominance selon l'invention.

L'architecture du circuit de la figure 3 est la suivante (les éléments identiques à ceux des figures 1 et 2 étant désignés par les mêmes références) : le comparateur de phase 12 reçoit toujours d'une part sur son entrée E1 le signal de sortie différentiel de l'oscillateur commandé en courant 10, et d'autre part sur son entrée E2 le signal de chrominance à démoduler.

L'oscillateur commandé en courant comprend une entrée E de commande de fréquence, entrée qui peut recevoir un courant d'asservissement i. Par ailleurs la fréquence d'oscillation de l'oscillateur 10 est périodiquement ajustée comme on l'a déjà expliqué par un circuit de réglage de base 14, de telle manière que pour un courant d'asservissement i nul la fréquence d'oscillation soit la fréquence de sousporteuse $F_0$ du signal de chrominance.

Le comparateur de phase possède deux sorties fournissant respectivement un courant $i_1$ et un courant $i_2$, dont la différence $i_1 - i_2$ constitue une mesure de l'écart de phase entre les signaux appliqués aux entrées E1 et E2 (en pratique $i_1 - i_2$ nul pour un écart de phase de 90° et $i_1 - i_2$ est d'autant plus important que la différence de phase des signaux d'entrée s'écarte de 90°).

Les courants $i_1$ et $i_2$ sont chacun recopiés pour produire des courants égaux ou proportionnels à $i_1$ et $i_2$, ceci de la manière suivante : $i_1$ est recopié pour fournir un courant $i_3$ ; $i_2$ est recopié pour fournir un courant $i_4$ ; $i_3$ est recopié pour fournir un courant $i_6$ ; la différence entre les courants $i_4$ et $i_6$ est appliquée à une borne d'une résistance Rs dont l'autre borne est reliée à l'entrée de commande E ; les rapports nominaux de recopie de courant sont de préférence égaux à 1, c'est-à-dire que $i_6 = i_3 = i_1$ et $i_4 = i_2$. Cependant ils peuvent être différents pourvu que le rapport entre $i_4$ et $i_2$ soit le même que le rapport entre $i_6$ et $i_1$.

De plus, une autre recopie de courant est effectuée, pour produire un courant $i_8$ proportionnel à $i_4$ (donc à $i_2$) et un courant $i_9$ proportionnel à $i_6$ (donc à $i_1$). Les rapports nominaux de recopie sont tels que les rapports $i_8/i_2$ et $i_9/i_1$ soient égaux, mais de plus, la valeur de ce rapport commun est choisie largement inférieure (par exemple 5 à 10 fois inférieure) au rapport $i_4/i_2$ ou $i_6/i_1$.

La différence entre les courants $i_8$ et $i_9$ est injectée dans l'entrée de commande E de l'oscillateur de telle manière que le courant d'asservissement i soit égal à $i_4 - i_6 + i_8 - i_9$.

Les recopies de courant sont effectuées de manière classique, par exemple en faisant circuler le courant à recopier dans un transistor dont la base et le collecteur sont réunis et dont l'émetteur est relié, à travers une résistance, à un potentiel constant. Le courant est recopié dans un transistor de recopie ayant sa base reliée à la base du premier et ayant son émetteur relié à travers une autre résistance au même potentiel constant que le premier. Le collecteur du transistor de recopie sert de sortie pour le courant recopié. Le rapport n entre les valeurs des résistances est le facteur principal qui définit le rapport de recopie. Lorsqu'il n'y a pas de résistances, le facteur principal est le rapport entre les surfaces d'émetteur des transistors.

Pour pouvoir faire la différence entre les courant $i_4$ et $i_6$ on relie à un noeud de circuit J1 les collecteurs des transistors T4 et T6 de recopie qui établissent respectivement les courants $i_4$ et $i_6$. C'est ce noeud J1 qui est relié à la résistance Rs. Mais pour que ce soit bien la différence des courants $i_4$ et $i_6$ qui circule dans la résistance, il faut que le courant $i_4$ soit un courant rentrant au noeud J1 et que le courant $i_6$ soit un courant sortant. L'établissement du courant rentrant $i_4$ se fait directement : on fait circuler le courant à recopier $i_2$ dans un transistor T2 relié par une résistance à un premier potentiel d'alimentation Vcc (potentiel haut) et le courant $i_4$ est recopié dans un transistor de recopie T4 relié par une résistance au même potentiel.

L'établissement du courant sortant $i_6$ se fait en deux étapes : on fait circuler le courant $i_1$ dans un transistor T1 relié par une résistance au potentiel Vcc ; on établit le courant de recopie $i_3$ par un transistor de recopie T3 relié au même potentiel ; puis on fait circuler le courant $i_3$ dans un autre transistor T5 relié par une résistance à un autre potentiel Vdd (potentiel bas) et on établit un courant de recopie de $i_3$ par un transistor de recopie T6 relié par une résistance au même potentiel Vdd.

Les courants $i_8$ et $i_9$ sont également l'un un courant rentrant et l'autre un courant sortant appliqués tous deux à un noeud de circuit J2 qui est le point de jonction des transistors T8 et T9 qui établissent les courants $i_8$ et $i_9$ de recopie des courants $i_2$ et $i_3$) le transistor T8 ayant son émetteur relié par une résistnace au potentiel Vcc alors que le transistor T9 est relié au potentiel Vdd.

Pour compléter la description de la figure 3, il faut encore préciser trois points :

1) un interrupteur SW1 permet de supprimer la sortie du courant différentiel $i_4-i_6$. De même un interrupteur SW2 permet de supprimer le courant différentiel $i_8 - i_9$. Cette suppression est effectuée à chaque fois que l'on effectue un réglage de base de l'oscillateur par le circuit 14, par exemple pendant le retour de trame (signal MES). Mais de plus l'interrupteur SW1 seul est ouvert pendant chaque retour de ligne du balayage (signal MES + SL) pour supprimer $i_4-i_6$ à ce moment.

Les interrupteurs sont représentés symboliquement sur la figure 3. Une manière simple de supprimer le signal différentiel $i_4-i_6$ est de prévoir un transistor commandé par le signal MES+SL, ce transistor étant connecté de manière à court-circuiter, lorsqu'il est rendu conducteur, les émetteurs des transistors T4 et T6. Ce court-circuit bloque simultanément T4 et T6 et annule donc $i_4-i_6$. La même disposition peut être adoptée pour la suppression du courant $i_8-i_9$.

2) l'oscillateur 10 peut être de divers types pourvu qu'il soit commandable en courant et que sa commande en courant puisse s'effectuer par une injection de courant dans une entrée E qui se comporte comme générateur de tension c'est-à-dire qui soit à un potentiel fixe sous une basse impédance. C'est le cas de l'oscillateur 10 qui est représenté à la figure 3 et qui est extrêmement classique : il comporte deux branches alimentées par une source de courant commune CC, avec un répartiteur de courants égalisant le courant dans les deux branches. Ce répartiteur est constitué par deux transistors T10 et T11 ayant leurs émetteurs reliés à la source de courant et leurs bases portées à un potentiel de référence V1. La commande de fréquence de l'oscillateur s'effectue par action sur le courant circulant dans les branches, et l'entrée de commande E est le point de jonction des émetteurs des transistors du répartiteur. Ces émetteurs sont à un potentiel V2 pratiquement invariable (compte tenu de l'amplitude limitée des variations du courant d'asservissement i). Ce potentiel V2 est égal à V1 diminué d'une chute de tension base-émetteur d'un transistor conducteur ;

3) enfin, dans le démodulateur de chrominance qui vient d'être décrit, la sortie S fournissant le signal de chrominance démodulé apparaissant sous forme de tension variable Vs est le noeud J1 auquel est connecté la résistance Rs.

La tension de sortie Vs est telle que $V_s - V_2 = R_s (i_4 - i_6)$.

Le fonctionnement du démodulateur et ses avantages vont maintenant être détaillés.

Comme on peut le comprendre d'après la description qui précède, le signal de sortie $V_s$, ou plus exactement $V_s - V_2$, est rigoureusement proportionnel à $i_4 - i_6$. Pour qu'il y ait une bonne démodulation il faudrait que le courant d'asservissement i soit aussi rigoureusement proportionnel à $i_4 - i_6$. Tout défaut de proportionnalité ici détériore le signal démodulé ; la détérioration est d'autant plus gênante si elle se traduit par un courant $i_4 - i_6$ non nul lorsque i est nul.

Le mieux serait donc théoriquement de s'arranger pour que $i_4 - i_6$ soit exactement le courant i injecté dans l'entrée E. Il suffirait pour cela, sur le schéma de la figure 3 que les transistors T8 et T9 soient purement et simplement supprimés.

Mais la demanderesse à constaté que cette suppression se traduit par un défaut sur l'image en couleurs restituée. Ce défaut est dû à ce que, pour des raisons tenant au mode d'établissement des composantes de chrominance R, V, B à partir des signaux démodulés R-Y, B-Y, Y, on souhaite insérer dans le signal de chrominance démodulé une tension qui est rigoureusement constante pendant les 10 microsecondes que dure le retour de ligne. On rappelle que pendant une fraction de ce retour de ligne une salve à fréquence centrale $F_0$ est émise.

L'interrupteur SW1 est justement prévu pour effectuer cette insertion : il se ferme pendant la durée du retour de ligne, ce qui annule le courant $i_4 - i_6$ et porte donc la sortie S au potentiel $V_2$ qui est constant.

Si c'était le courant $i_4 - i_6$ lui-même qui était injecté dans l'entrée E, son annulation porterait la fréquence de l'oscillateur à une valeur fixe (en principe $F_0$ si le circuit de réglage de base a bien fonctionné lors du dernier réglage). Dans ces conditions le comparateur de phase n'agirait plus du tout pour asservir la fréquence de l'oscillateur à la fréquence du signal de chrominance qui est toujours reçu. La boucle d'asservissement serait interrompue pendant 10 microsecondes. Puis, au début de la ligne, la boucle d'asservissement se reformerait et il y aurait de nouveau un asservissement. Mais le rattrappage de cet asservissement ne se fait pas immédiatement il peut prendre plusieurs cycles de sous porteuse. Cela se traduit par des couleurs erronées en début de chaque ligne sur l'image restituée. Ce défaut est totalement inacceptable.

On remarquera que ce défaut n'existait pas dans le schéma de la figure 2 puisque pendant l'insertion de la tension de référence (interrupteur K2 ouvert), la boucle d'asservissement restait fermée. Par contre il y avait un défaut de démodulation dû à l'imprécision de recopie établissant une absence de proportionalité rigoureuse entre le courant d'asservissement i et la tension de sortie Vs.

Dans le schéma de la figure 3, on fait disparaître le défaut dû à l'ouverture de la boucle d'asservissement tout en minimisant les défauts dus aux imprécisions de recopie.

Ceci est fait grâce aux transistors T8 et T9 qui maintiennent une boucle d'asservissement pendant le retour de ligne.

Seul le courant $i_4 - i_6$ est annulé pendant le retour de ligne, car l'interrupteur SW2 n'est pas fermé pendant ces retours de ligne. Le courant d'asservissement i est $i = i_4 - i_6 + i_8 - i_9$ en général ; il est $i = i_8 - i_9$ pendant les retours de ligne ; l'asservissement continue de fonctionner par conséquent ($i_8 - i_9$ prenant la valeur appropriée pour que l'oscillateur suive la fréquence du signal de chrominance à démoduler). Il n'y a pas de décrochage de l'asservissement nécessitant un recalage de l'oscillateur en début de ligne.

Pendant la démodulation de la ligne, les variations de tension de sortie sont proportionnelles à $i_4 - i_6$. Elles seraient également proportionnelles à $i = i_4 - i_6 + i_8 - i_9$ si les rapports de recopie $i_8/i_4$ et $i_9/i_6$ étaient parfaitement identiques. Mais il peut y avoir une erreur. Cependant, cette erreur ne joue que sur une fraction du courant i. Autrement dit, si $i_8 - i_9$ présente une erreur de recopie de 2 % alors que $i_8 - i_9$ a une valeur théorique égale à $i_4 - i_6/n$, l'erreur sur la proportionalité de i par rapport à $i_4 - i_6$ n'est que de 2 % divisé par n + 1.

C'est pourquoi en choisissant n largement supérieur à 1 (5 à 10 par exemple), mais quand même pas trop grand pour que l'asservissement continue de fonctionner pendant les retours de ligne, on obtient une erreur de démodulation divisée par n + 1. On passe par exemple de 2 % à 0,2 % avec n = 9.

Enfin, il faut préciser que le circuit de réglage de base 14 fonctionne comme on l'a déjà expliqué c'est-à-dire que périodiquement, par exemple à chaque retour de trame, le signal MES annule le courant i en fermant à la fois l'interrupteur SW1 et l'interrupteur SW2 ; l'oscillateur est alors réglé pour fournir la fréquence $F_0$ en l'absence de courant d'asservissement i.

## Revendications

Démodulateur de chrominance pour récepteur de télévision en couleurs, comprenant un oscillateur (10) à fréquence commandée par un courant pourvu d'une entrée de commande (E) et d'une sortie, et un comparateur de phase (12) ayant une première entrée (E1) recevant la sortie de l'oscillateur, une deuxième entrée (E2) recevant un signal de chrominance à démoduler, et deux sorties différentielles en courant (S1 et S2), caractérisé en ce que:

a) l'oscillateur est d'un type tel que son entrée de commande (E) soit constituée par un nœud de circuit maintenu à un potentiel fixe (V2) sous une basse impédance,

b) les sorties du comparateur de phase sont reliées à deux ensembles de recopie de courants, dont le premier effectue des recopies avec un premier rapport et dont le second effectue des recopies avec un deuxième rapport plusieurs fois inférieur au premier,

c) le premier ensemble de recopie (T1, T2, T3, T4, T5, T6) possède deux entrées pour recevoir respectivement les courants des deux sorties différentielles du comparateur de phase et une sortie (J1) pour fournir un courant ($i_4-i_6$) représentant avec le premier rapport de recopie la différence ($i_2-i_1$) des courants des deux sorties différentielles, cette sortie constituant la sortie (S) du démodulateur et étant connectable à une borne d'une résistance (Rs) dont l'autre borne est directement reliée à l'entrée de commande (E) de l'oscillateur,

d) le deuxième ensemble de recopie (T1, T3, T5, T8, T9) possède une sortie (J2) pour fournir un courant ($i_8-i_9$) représentant avec le deuxième rapport de recopie la différence des courants des deux sorties différentielles du comparateur, cette sortie (J2) étant connectable à l'entrée de commande (E) de l'oscillateur,

e) un moyen d'interruption (SW1) est prévu pour inhiber pendant les retours de ligne l'application du courant de sortie du premier ensemble de recopie vers ladite entrée de commande sans inhiber l'application du courant de sortie du second.

## Claims

A chrominance demodulator for a colour TV receiver, comprising a current-controlled oscillator (10) provided with a control input (E) and an output, and a phase comparator (12) having a first input (E1) receiving the output of the oscillator, a second input (E2) receiving a chrominance signal to be demodulated, and two current differential outputs (S1 and S2), characterized in this that:

a) the oscillator is such that its control input (E) is constituted by a circuit node maintained at a fixed voltage (V2) under a low impedance,

b) the phase comparator outputs are connected to two current copy sets, the first one making copies according to a first ratio and the second one making copies according to second ratio several times lower than the first ratio,

c) the first copy set (T1, T2, T3, T4, T5, T6) has two inputs to receive, respectively, the currents of the two differential outputs of the phase comparator and an output (J1) for supplying a current ($i_4-i_6$) representing with the first copy ratio the difference ($i_2-i_1$) of the currents of the two differential outputs, said output constituting the output (S) of the demodulator and being liable to be connected to a terminal of a resistor (Rs), the other terminal of which is directly connected to the control input (E) of the oscillator,

d) the second copy set (T1, Tt2, T3, T5, T8, T9) has an output (J2) for supplying a current ($i_8-i_9$) representing with the second copy ratio the current difference of the two differential outputs of the comparator, said output (J2) being liable to be connected to the control input (E) of the oscillator,

e) an interruption means (SW1) is provided for inhibiting during line retraces the application of the output current to the first copy set towards said control input without inhibiting the application of the output current of the second set.

## Patentansprüche

Chrominanzdemodulator für Farbfernsehempfänger mit einem stromgesteuerten und einen Steuereingang (E) sowie einen Ausgang aufweisenden Frequenzoszillator (10) und mit einem Phasenvergleicher (12), der einen ersten Eingang (E1) zum Empfang der Ausgangssignale des Oszillators, einen zweiten Eingang (E2) zum Empfang eines zu demodulierenden Chrominanzsignals und zwei differentielle Stromausgänge (S1, S2) aufweist, dadurch gekennzeichnet, daß

a) der Steuereingang (E) des Oszillators durch einen Schaltungspunkt gebildet wird, der auf einem festen Potential (V2) bei niedriger Impedanz gehalten wird,

b) die Ausgänge des Phasenvergleichers mit zwei Stromkopierschaltungen verbunden sind, wobei die erste Kopierschaltung den Strom entsprechend einem ersten Verhältnis und die zweite Kopierschaltung des Strom entsprechend einem zweiten Verhältnis kopiert, das mehrfach niedriger als das erste Verhältnis ist,

c) die erste Kopierschaltung (T1, T2, T3, T4, T5, T6) zwei Eingänge zum Empfangen der jeweiligen Ströme von den zwei differentiellen Ausgängen des Phasenvergleichers und einen Ausgang (J1) zum Liefern eines Stromes ($i_4-i_6$) aufweist, der mit dem ersten Kopierverhältnis die Differenz ($i_2-i_4$) der Ströme der beiden differentiellen Ausgänge repräsentiert, wobei dieser Ausgang den Ausgang (S) des Demodulators bildet und mit einem Anschluß eines Widerstandes (Rs) verbindbar ist, dessen anderer Anschluß direkt mit dem Steuereingang (E) des Oszillators verbunden ist,

d) die zweite Kopierschaltung (T1, T2, T3, T5, T8, T9) einen Ausgang (J2) zum Liefern eines Stromes ($i_8-i_9$) aufweist, der mit dem zweiten Kopierverhältnis die Differenz der Ströme beider differentiellen Ausgänge des Vergleichers repräsentiert, wobei dieser Ausgang (J2) mit dem Steuereingang (E) des Oszillators verbindbar ist, und

e) ein Unterbrecher (SW1) vorgesehen ist, um während des Zeilenrücksprungs das Anlegen eines Stromes vom Ausgang der ersten Kopierschaltung an den Steuereingang zu verhindern, ohne jedoch das Anlegen eines Stromes vom Ausgang der zweiten Kopierschaltung zu verhindern.

# FIG_1

# FIG_2

FIG_3

EP 0 222 653 B1